# EUROPEAN PATENT APPLICATION

(11) **EP 4 588 545 A1**
(43) Date of publication of application: **23.07.2025**
(21) Application number: 25152610.9
(22) Date of filing: 17.01.2025
(51) Int. Cl.: B01D 11/02, B08B 3/10, B08B 3/14, C01D 15/02, C01D 15/08, C22B 3/06, C22B 3/08, C22B 3/10, C22B 3/44, C22B 7/00, C22B 26/12, H01M 10/54, B01B 1/00, B01D 1/00, B01D 11/04, B09B 101/16, C22B 3/12, C22B 3/22

(54) **METHOD OF RECOVERING LITHIUM PRECURSOR, METHOD OF PREPARING POSITIVE ELECTRODE ACTIVE MATERIAL, AND RECHARGEABLE LITHIUM BATTERY**

(30) Priority: 22.01.2024 KR 20240009657
(71) Applicant: SAMSUNG SDI CO., LTD., Yongin-si, Gyeonggi-do 17084 (KR)
(72) Inventor: SOHN, Myungbeom, Yongin-si (KR); YOU, Yongchan, Yongin-si (KR); LEE, Youngjun, Yongin-si (KR); PARK, Seongin, Yongin-si (KR); YOO, Kwangyong, Yongin-si (KR)
(74) Representative: Marks & Clerk LLP

(57) **Abstract**

Methods of recovering lithium precursors, methods of preparing positive electrode active materials, and rechargeable lithium batteries are provided. The method of recovering a lithium precursor comprises preparing a first solution that contains lithium ions, preparing a second solution by using a waste solution generated in a washing process of a positive electrode active material, preparing a third solution by introducing the second solution to the first solution, and extracting the lithium precursor from the third solution.

## Description

### BACKGROUND

The present disclosure relates to a method of recovering a lithium precursor from waste related to a rechargeable lithium battery, and more particularly, to a method of recovering a lithium precursor from waste, said method using a waste solution produced in a washing process of a positive electrode active material.

A rechargeable lithium battery is utilized as energy storage and supply sources in various fields. Rechargeable lithium batteries are widely used as energy storage and supply sources not only in portable apparatuses such as mobile phones, tablet PCs, wearable devices, laptop computers, digital cameras, and power tools, but also in transportation means such as hybrid cars, electric cars, and electric boards. Recently, applications of rechargeable lithium batteries have expanded to future industries such as drones, robots, and urban air mobility (UAM).

With growing awareness of climate change and increasing interest in environmental sustainability, the electric vehicle market has experienced significant growth. Consequently, the demand for rechargeable lithium batteries has risen sharply. However, since primary materials required for manufacturing rechargeable lithium batteries are often obtained from natural sources, environmental destruction and pollution inevitably occur during the raw material extraction process. Therefore, there is a need for the development of recycling technologies for raw materials used to manufacture rechargeable lithium batteries.

Thus, attention is being focused on methods of recovering valuable metals such as transition metal precursors and lithium precursors from rechargeable lithium battery-related waste including discarded rechargeable lithium batteries, waste generated during fabrication processes of rechargeable lithium batteries, and waste solutions produced in washing processes of positive electrode active materials of rechargeable lithium batteries. The recovered valuable metals may be recycled for fabricating rechargeable lithium batteries. And research and development efforts are actively being conducted to develop recycling methods that are more eco-friendly, cost-effective, and capable of recovering high concentrations of valuable metals.

Methods of recovering valuable metals from discarded rechargeable lithium batteries or a waste generated during fabrication of rechargeable lithium batteries are being implemented in various ways. However, conventional methods have a problem with respect to the heavy use of alkaline solutions during the recovery process. A by-product produced from the alkaline solution induces environmental pollution, and, thus, alternatives are required to replace the alkaline solution.

Many methods are being implemented in various ways to recover lithium precursors from waste solutions generated in washing processes of positive electrode active materials. A large amount of lithium is contained in the waste solutions generated in washing processes of positive electrode active materials. However, conventional methods require separate processes to recover lithium precursors from the waste solutions. In addition, since no process typically achieves a 100% recovery rate, the preparation of the separate process inherently brings about lithium loss. Accordingly, there is a need for improved methods of recovering lithium precursors.

### SUMMARY

An embodiment of the present disclosure provides a method of recovering a lithium precursor, in which method a waste solution generated in a washing process of a positive electrode active material is used to recover lithium precursors from waste related to rechargeable lithium batteries. The method of recovering a lithium precursor may solve environmental problems arising from the excessive use of alkaline solutions discussed above, economic issues associated with the necessity of separate process, and efficiency concerns due to lithium loss.

An embodiment of the present disclosure provides a method of preparing a positive electrode active material including the recovered lithium precursor obtained through the recovery method and a rechargeable lithium battery including the positive electrode active material.

According to an embodiment of the present disclosure, a method of recovering a lithium precursor may comprise: preparing a first solution that contains lithium ions; preparing a second solution by using a waste solution generated in a washing process of a positive electrode active material; preparing a third solution by introducing the second solution to the first solution; and extracting the lithium precursor from the third solution.

According to an embodiment of the present disclosure, a rechargeable lithium battery may comprise a positive electrode active material prepared using the lithium precursor recovered by the method of recovering a lithium precursor.

According to an embodiment of the present disclosure, a method of preparing a positive electrode active material for a rechargeable lithium battery may comprise: mixing and calcining a transition metal precursor and a lithium precursor that is recovered by the method described herein; and washing the calcined mixture.

According to an embodiment of the present disclosure, a rechargeable lithium battery comprises the positive electrode active material prepared by the method of preparing a positive electrode active material.

At least some of the above and other features of the invention are set out in the claims.

### BRIEF DESCRIPTION OF DRAWINGS

FIG. 1 illustrates a simplified conceptual diagram showing a rechargeable lithium battery according to some embodiments of the present disclosure.
FIGS. 2 to 5 illustrate simplified diagrams showing a rechargeable lithium battery according to an embodiment, wherein FIG. 2 shows a cylindrical battery, FIG. 3 shows a prismatic battery, and FIGS. 4 and 5 show pouch-type batteries.
FIG. 6 illustrates a flow chart showing a method of preparing a first solution according to the present disclosure.
FIG. 7 illustrates a flow chart showing a method of preparing a second solution according to the present disclosure.
FIG. 8 illustrates a flow chart showing a method of extracting a lithium precursor according to the present disclosure.
FIG. 9 illustrates a graph showing property evaluation results of high-nickel rechargeable lithium batteries according to Embodiment 4 and Comparative Example 4.
FIG. 10 illustrates a graph showing property evaluation results of low-nickel rechargeable lithium batteries according to Embodiment 5 and Comparative Example 5.

### DETAILED DESCRIPTION OF EMBODIMENTS

In order to sufficiently understand the configuration and effect of the present disclosure, embodiments of the present disclosure will be described with reference to the accompanying drawings. It should be noted, however, that the present disclosure is not limited to the following embodiments, and may be implemented in various forms. Rather, the embodiments are provided only to disclose the present disclosure and let those skilled in the art fully know the scope of the present disclosure.

In this description, it will be understood that, when an element is referred to as being on another element, the element can be directly on the other element or intervening elements may be present between therebetween. In the drawings, thicknesses of some components are exaggerated for effectively explaining the technical contents. Like reference numerals refer to like elements throughout the specification.

Unless otherwise specially noted in this description, the expression of singular form may include the expression of plural form. In addition, unless otherwise specially noted, the phrase "A or B" may indicate "A but not B", "B but not A", and "A and B". The terms "comprises/includes" and/or "comprising/including" used in this description do not exclude the presence or addition of one or more other components.

As used herein, the term "combination thereof' may refer to a mixture, a stack, a composite, a copolymer, an alloy, a blend, or a reaction product.

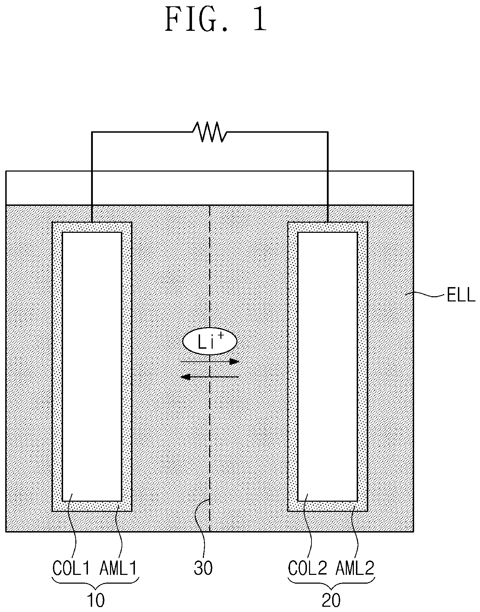

FIG. 1 illustrates a simplified conceptual diagram showing a rechargeable lithium battery according to an embodiment of the present disclosure. Referring to FIG. 1, a rechargeable lithium battery may include a positive electrode 10, a negative electrode 20, a separator 30, and an electrolyte ELL.

The positive electrode 10 and the negative electrode 20 may be spaced apart from each other across the separator 30. The separator 30 may be disposed between the positive electrode 10 and the negative electrode 20. The positive electrode 10, the negative electrode 20, and the separator 30 may be in contact with the electrolyte ELL. The positive electrode 10, the negative electrode 20, and the separator 30 may be impregnated by the electrolyte ELL.

The electrolyte ELL may be a medium by which lithium ions are transferred between the positive electrode 10 and the negative electrode 20. In the electrolyte ELL, the lithium ions may move through the separator 30 toward one of the positive electrode 10 and the negative electrode 20.

### Positive Electrode 10

The positive electrode 10 for a rechargeable lithium battery may include a current collector COL 1 and a positive electrode active material layer AML 1 formed on the current collector COL 1. The positive electrode active material layer AML 1 may include a positive electrode active material and further include a binder and/or a conductive material. Aluminium (Al) may be used as the current collector COL1, but the present disclosure is not limited thereto.

### Negative Electrode 20

The negative electrode 20 for a rechargeable lithium battery may include a current collector COL2 and a negative electrode active material layer AML2 positioned on the current collector COL2. The negative electrode active material layer AML2 may include a negative electrode active material and may further include a binder and/or a conductive material.

The negative electrode active material layer AML2 may include a negative electrode active material in an amount of about 90 wt% to about 99 wt%, a binder in an amount of about 0.5 wt% to about 5 wt%, and a conductive material in an amount of about 0 wt% to about 5 wt%.

The binder may serve to improve attachment of negative electrode active material particles to each other and also to improve attachment of the negative electrode active material to the current collector COL2. The binder may include a non-aqueous binder, an aqueous binder, a dry binder, or a combination thereof.

The non-aqueous binder may include polyvinyl chloride, carboxylated polyvinyl chloride, polyvinyl fluoride, ethylene propylene copolymer, polystyrene, polyurethane, polytetrafluoroethylene, polyvinylidene fluoride, polyethylene, polypropylene, polyamide imide, polyimide, or a combination thereof.

The aqueous binder may include styrene-butadiene rubber, (meth)acrylated styrene-butadiene rubber, (meth)acrylic rubber, butyl rubber, fluoro elastomer, polyethylene oxide, polyvinyl pyrrolidone, polyepichlorohydrin, polyphosphazene, poly(meth)acrylonitrile, ethylene propylene diene copolymer, polyvinyl pyridine, chlorosulfonated polyethylene, latex, polyester resin, (meth)acrylic resin, phenolic resin, epoxy resin, polyvinyl alcohol, or a combination thereof.

When an aqueous binder is used as the negative electrode binder, a cellulose-based compound capable of providing viscosity may further be included. The cellulose-based compound may include one or more of carboxymethyl cellulose, hydroxypropylmethyl cellulose, methyl cellulose, and alkali metal salts thereof. The alkali metal may include Na, K, or Li.

The dry binder may include a fibrillizable polymer material, for example, polytetrafluoroethylene, polyvinylidene fluoride, polyvinylidene fluoride-hexafluoropropylene copolymer, polyethylene oxide, or a combination thereof.

The conductive material may be used to provide an electrode with conductivity, and any suitable conductive material that does not cause a chemical change in a battery may be used as the conductive material. For example, the conductive material may include a carbon-based material such as natural graphite, artificial graphite, carbon black, acetylene black, Ketjen black, carbon fiber, carbon nano-fiber, and carbon nano-tube; a metal powder or metal fiber including one or more of copper, nickel, aluminium, and silver; a conductive polymer such as a polyphenylene derivative; or a mixture thereof.

The current collector COL2 may include a copper foil, a nickel foil, a stainless-steel foil, a titanium foil, a nickel foam, a copper foam, a polymer substrate coated with a conductive metal, or a combination thereof.

### Negative Electrode Active Material

The negative electrode active material in the negative electrode active material layer AML2 may include a material that can reversibly intercalate and deintercalate lithium ions, lithium metal, a lithium metal alloy, a material that can dope and de-dope lithium, or transition metal oxide.

The material that can reversibly intercalate and deintercalate lithium ions may include a carbon-based negative electrode active material, for example, crystalline carbon, amorphous carbon, or a combination thereof. The crystalline carbon may include, for example, graphite such as non-shaped, sheet-shaped, flake-shaped, sphere-shaped, or fiber-shaped natural or artificial graphite, and the amorphous carbon may include soft carbon, hard carbon, mesophase pitch carbon, or calcined coke.

The lithium metal alloy may include an alloy of lithium and a metal that is selected from Na, K, Rb, Cs, Fr, Be, Mg, Ca, Sr, Si, Sb, Pb, In, Zn, Ba, Ra, Ge, Al, and Sn.

The material that can dope and de-dope lithium may include a Si-based negative electrode active material or a Sn-based negative electrode active material. The Si-based negative electrode active material may include silicon, silicon-carbon composite, SiOx (0<x<2), Si-Q alloy (where Q is alkali metal, alkaline earth metal, Group 13 element, Group 14 element (except for Si), Group 15 element, Group 16 element, transition metal, rare-earth element, or a combination thereof), or a combination thereof. The Sn-based negative electrode active material may include Sn, SnO₂, a Sn-based alloy, a combination thereof.

The silicon-carbon composite may be a composite of silicon and amorphous carbon. According to an embodiment, the silicon-carbon composite may have a structure in which the amorphous carbon is coated on a surface of the silicon particles. For example, the silicon-carbon composite may include a secondary particle (core) in which primary silicon particles are assembled, and an amorphous carbon coating layer (shell) positioned on a surface of the secondary particle. The amorphous carbon may also be positioned between the primary silicon particles, and the primary silicon particles may be coated with the amorphous carbon. The secondary particles may be present dispersed in an amorphous carbon matrix.

The silicon-carbon composite may further include crystalline carbon. For example, the silicon-carbon composite may include a core including crystalline carbon and silicon particles and may also include an amorphous carbon coating layer positioned on a surface of the core.

The Si-based negative electrode active material or the Sn-based negative electrode active material may be used in combination with a carbon-based negative electrode active material.

### Separator 30

Based on type of the rechargeable lithium battery, the separator 30 may be present between the positive electrode 10 and the negative electrode 20. The separator 30 may include one or more of polyethylene, polypropylene, and polyvinylidene fluoride, and may have a multi-layered separator thereof such as a polyethylene/polypropylene bi-layered separator, a polyethylene/polypropylene/polyethylene tri-layered separator, and a polypropylene/polyethylene/polypropylene tri-layered separator.

The separator 30 may include a porous substrate and a coating layer positioned on one or opposite surfaces of the porous substrate, said coating layer including an organic material, an inorganic material, or a combination thereof.

The porous substrate may be a polymer layer including one selected from polyolefin such as polyethylene and polypropylene, polyester such as polyethylene terephthalate and polybutylene terephthalate, polyacetal, polyamide, polyimide, polycarbonate, polyetherketone, polyaryletherketone, polyetherimide, polyamideimide, polybenzimidazole, polyethersulfone, polyphenyleneoxide, cyclic olefin copolymer, polyphenylenesulphide, polyethylene naphthalate, glass fiber, Teflon, and polytetrafluoroethylene, or may be a copolymer or mixture including two or more of the materials mentioned above.

The organic material may include a polyvinylidenefluoride-based copolymer or a (meth)acrylic copolymer.

The inorganic material may include an inorganic particle selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, Boehmite, or a combination thereof, but the present disclosure is not limited thereto.

The organic material and the inorganic material may be mixed in one coating layer or may be present as a stack of a coating layer including the organic material and a coating layer including an inorganic material.

### Electrolyte ELL

The electrolyte ELL for the rechargeable lithium battery may include a non-aqueous organic solvent and a lithium salt.

The non-aqueous organic solvent may serve as a medium for transmitting ions that participate in an electrochemical reaction of a battery. The non-aqueous organic solvent may include a carbonate-based solvent, an ester-based solvent, an ether-based solvent, a ketone-based solvent, an alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), ethylmethyl carbonate (EMC), ethylene carbonate (EC), propylene carbonate (PC), or butylene carbonate (BC).

The ester-based solvent may include methyl acetate, ethyl acetate, n-propyl acetate, dimethyl acetate, methyl propionate, ethyl propionate, decanolide, mevalonolactone, valerolactone, or caprolactone.

The ether-based solvent may include dibutyl ether, tetraglyme, diglyme, dimethoxyethane, 2-methyltetrahydrofuran, 2,5-dimethyltetrahydrofuran, or tetrahydrofuran. The ketone-based solvent may include cyclohexanone. The aprotic solvent may include nitriles such as R-CN (where R is a hydrocarbon group having a C2 to C20 linear, branched, or cyclic structure and may include a double bond, an aromatic ring, or an ether group); amides such as dimethylformamide; dioxolanes such as 1,3-dioxolane or 1,4-dioxolane; or sulfolanes.

The non-aqueous organic solvent may be used alone or in a mixture of two or more substances.

In addition, when a carbonate-based solvent is used, a cyclic carbonate and a chain carbonate may be mixed and used, and the cyclic carbonate and the chain carbonate may be mixed in a volume ratio of about 1:1 to about 1:9.

The lithium salt may be a material that is dissolved in the non-aqueous organic solvent to serve as a supply source of lithium ions in a battery. The lithium salt plays a role in enabling a basic operation of a rechargeable lithium battery and in promoting the movement of lithium ions between positive and negative electrodes. The lithium salt may include, for example, at least one selected from LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N, lithium bis(fluorosulfonyl)imide (LiFSI), LiC₄F₉SO₃, LiN(CₓF₂ₓ₊₁SO₂)(C_{y}F_{2y+1}SO₂) (where x and y are integers between 1 to 20), lithium trifluoromethane sulfonate, lithium tetrafluoroethanesulfonate, lithium difluorobis(oxalato)phosphate (LiDFBOP), and lithium bis(oxalato) borate (LiBOB)

### Rechargeable Lithium Battery

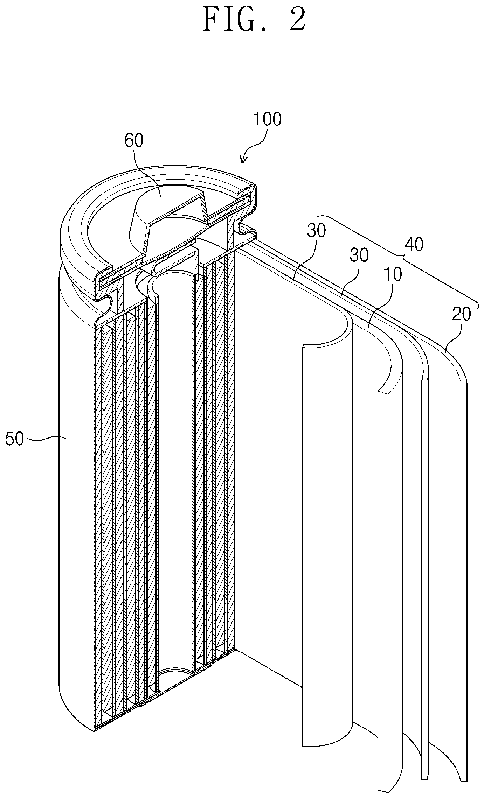

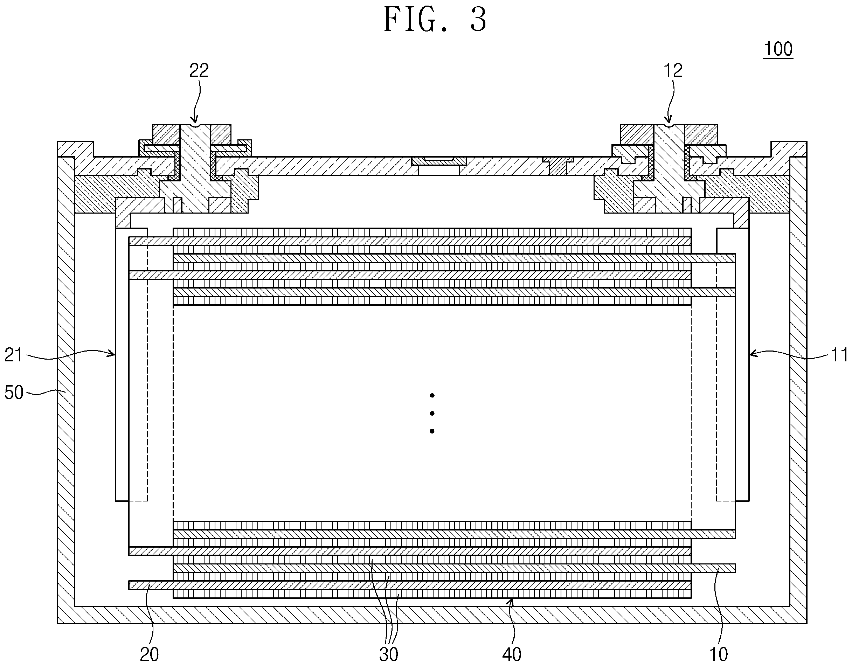

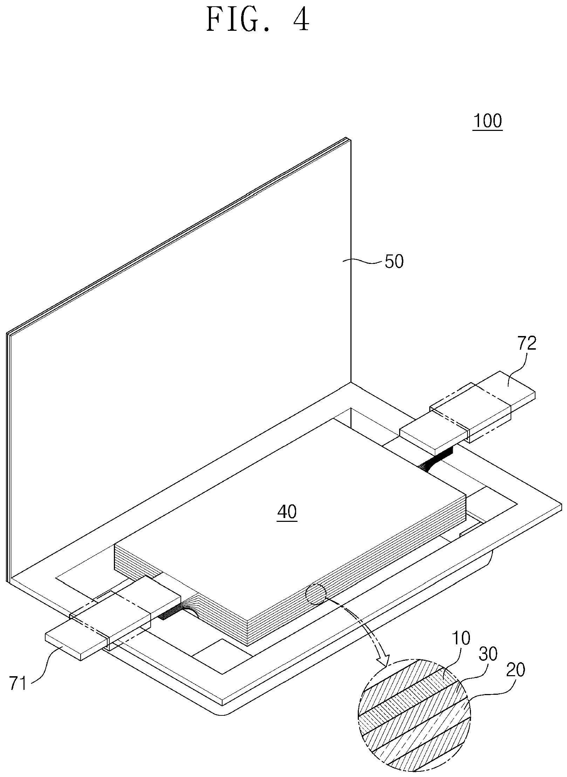

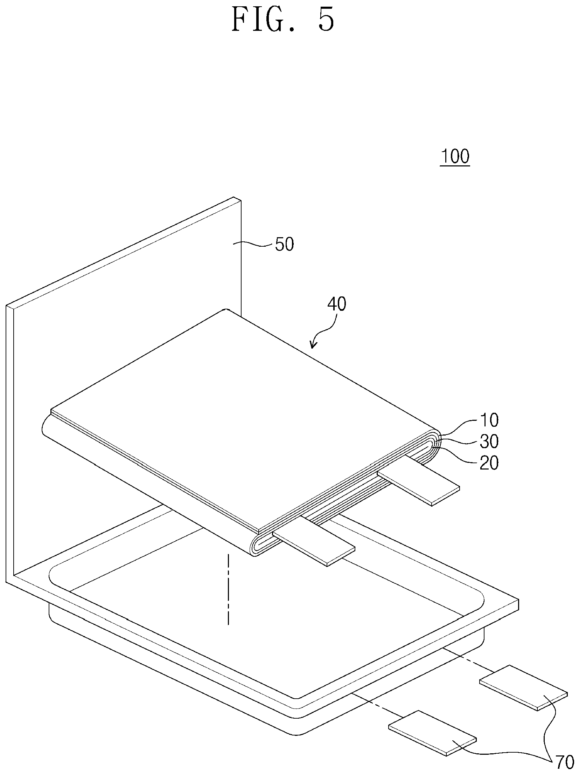

Based on the shape of a rechargeable lithium battery, the rechargeable lithium battery may be classified into cylindrical, prismatic, pouch, and coin types. FIGS. 2 to 5 illustrate simplified diagrams showing a rechargeable lithium battery according to an embodiment, with FIG. 2 showing a cylindrical battery, FIG. 3 showing a prismatic battery, and FIGS. 4 and 5 showing pouch-type batteries. Referring to FIGS. 2 to 4, a rechargeable lithium battery 100 may include an electrode assembly 40 in which a separator 30 is interposed between a positive electrode 10 and a negative electrode 20, and may also include a casing 50 in which the electrode assembly 40 is accommodated. The positive electrode 10, the negative electrode 20, and the separator 30 may be impregnated by an electrolyte (not shown). The rechargeable lithium battery 100 may include a sealing member 60 that seals the casing 50 as illustrated in FIG. 2. In addition, as illustrated in FIG. 3, the rechargeable lithium battery 100 may include a positive electrode lead tab 11, a positive electrode terminal 12, a negative electrode lead tab 21, and a negative electrode terminal 22. As shown in FIGS. 4 and 5, the rechargeable lithium battery 100 may include an electrode tab 70, or a positive electrode tab 71 and a negative electrode tab 72, said electrode tab 70 serving as an electrical path for externally inducing a current generated in the electrode assembly 40.

A rechargeable lithium battery according to an embodiment of the present disclosure may be used in automotive vehicles, mobile phones, and/or any other electrical devices, but the present disclosure is not limited thereto.

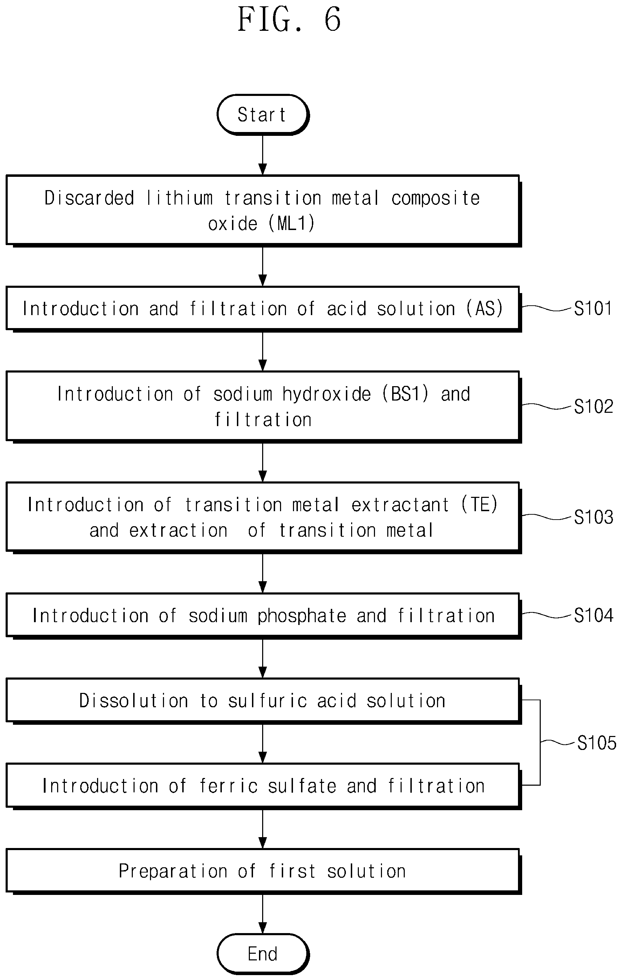

FIGS. 6 to 8 illustrate flow charts showing a lithium precursor recovery method according to the present disclosure. With reference to FIGS. 6 to 8, the following will describe in detail a lithium precursor recovery method according to the present disclosure.

### Preparation of First Solution

FIG. 6 illustrates a flow chart showing a method of preparing a first solution according to the present disclosure.

Referring to FIG. 6, a method of preparing a first solution from a discarded lithium transition metal composite oxide ML1 may include introducing the discarded lithium transition metal composite oxide ML1 to an acid solution AS followed by filtration to remove an undissolved solid substance (S101), introducing sodium hydroxide (NaOH) BS 1 followed by filtration to remove a precipitate (S102), introducing a transition metal extractant TE to extract a transition metal (S103), introducing sodium phosphate (Na₃PO₄) followed by filtration to obtain precipitated lithium phosphate (Li₃PO₄) (S 104), dissolving the lithium phosphate in a sulfuric acid solution (S105), and introducing ferric sulfate (Fe₂(SO₄)₃) followed by filtration to remove a precipitated ferric phosphate (FePO₄) (S105). Thus, the first solution including lithium ions is prepared from the discarded lithium transition metal composite oxide ML1.

The discarded lithium transition metal composite oxide ML1 may be from a powdered discarded rechargeable lithium battery or a waste generated during fabrication process of rechargeable lithium batteries. The discarded lithium transition metal composite oxide ML1 may include a compound expressed by Chemical Formula 1 below.

[Chemical Formula 1] LiM1ₐM2_{b}M3_{c}M4_{d}O₂

In Chemical Formula 1, 0≤a≤1, 0≤b≤1, 0≤c≤1, 0≤d≤1, and a+b+c+d=1 hold true. Each of M1, M2, M3, and M4 in Chemical Formula 1 may be an element selected from Ni, Co, Al, Cu, Mn, Ti, Mo, Zn, Zr, Si, Ge, V, Cr, B, Mg, Na, Sr, Ag, Nb, Ga, Ca, and Ba.

The discarded lithium transition metal composite oxide ML1 may be an NCA-based oxide including nickel (Ni), cobalt (Co), and aluminium (Al), or an NCM-based oxide including nickel (Ni), cobalt (Co), and manganese (Mn).

Among potential sources that can serve as raw materials of the discarded lithium transition metal composite oxide ML1, the powdered discarded rechargeable lithium battery may be obtained by grinding and thermally treating a discarded rechargeable lithium battery. The powdered discarded rechargeable lithium battery may include materials originated from a positive electrode, a negative electrode, a separator, and an electrolyte. In an embodiment, the material originated from the positive electrode may be aluminium (Al). The material originated from the negative electrode may be copper (Cu).

Among other potential sources that can serve as raw materials of the discarded lithium transition metal composite oxide ML1, waste generated during fabrication process of a rechargeable lithium battery may be obtained by grinding, and thermally treating a positive electrode active material and/or a positive electrode. Alternatively, waste generated during fabrication process of a rechargeable lithium battery may be obtained from solid-liquid separation and heat treatment of a positive electrode slurry. The waste generated during the fabrication process of a rechargeable lithium battery may include materials originated from a positive electrode active material, a positive electrode, and a positive electrode slurry. In an embodiment, the material originated from the positive electrode active material may be nickel (Ni).

The acid solution AS may include at least one acid selected from sulfuric acid (H₂SO₄), hydrochloric acid (HCl), nitric acid (HNO₃), and phosphoric acid (H₃PO₄). When the acid solution AS is introduced, hydrogen peroxide (H₂O₂) and/or sulfur dioxide (SO₂) may also be introduced to accelerate dissolution of transition metals.

The introduction of sodium hydroxide BS1 may be carried out within a pH range where precipitation of manganese (Mn), cobalt (Co), and nickel (Ni) is not significant. In an embodiment, when an introduction amount of sodium hydroxide BS1 is adjusted to achieve a pH range of about 3 to about 4, iron (Fe) may be precipitated as Fe(OH)₃ while manganese (Mn), cobalt (Co), and nickel (Ni) maintain their ionic state.

A precipitate generated after the introduction of sodium hydroxide BS1 may include an element other than manganese (Mn), cobalt (Co), and nickel (Ni) among transition metals. In an embodiment, the precipitate may include iron (Fe), aluminium (Al), copper (Cu), zinc (Zn), magnesium (Mg), and/or calcium (Ca). The precipitate may include a divalent or trivalent transition metal other than manganese (Mn), cobalt (Co), and nickel (Ni). In an embodiment, the precipitate may include aluminium hydroxide (Al(OH)₃) and/or copper hydroxide (Cu(OH)₂).

The step S102 of filtering a precipitate generated after the introduction of sodium hydroxide BS1 may be accomplished by using a solid-liquid separator such as a filter, a filter press, or a decanter (centrifuge).

Even after the introduction of sodium hydroxide BS1 and subsequent filtration to remove the precipitate, a transition metal element that has not fully precipitated may still be present. In an embodiment, slight amounts of aluminium (Al), copper (Cu), and/or iron (Fe) may still be present. The elements that have not fully precipitated may be included in the first solution that is prepared.

The transition metal extractant TE may include a phosphoric acid-based compound, a phosphonic acid-based compound, a phosphinic acid-based compound, and/or a carboxylic acid-based compound.

The step S103 of introducing the transition metal extractant TE to extract the transition metal may be performed by sequentially increasing the pH. In an embodiment, manganese (Mn) may be extracted by introducing di-(2-ethylhexyl)phosphoric acid (D2EHPA) while maintaining the pH range of about 3 to about 4. Afterwards, sodium hydroxide (NaOH) may be introduced to adjust the pH to a range of about 4 to about 5, and then bis(2,2,4-trimethylpentyl)phosphinic acid (Cyanex272) may be introduced to extract cobalt (Co). Thereafter, sodium hydroxide (NaOH) may be introduced to adjust the pH to a range of about 5 to about 6, and then 2-ethylhexyl 2-ethylhexyphosphonic acid (PC88A) may be introduced to extract nickel (Ni). In some embodiments, PC88A can be omitted and Cyanex272 may be used to extract both Ni and Co.

A saponified transition metal extractant may be used instead of the transition metal extractant TE. The mechanism of extracting transition metals with the transition metal extractant TE may include the substitution of hydrogen ions of the transition metal extractant TE with transition metal ions and the combination of the substituted transition metal ions with anions of the transition metal extractant TE. In this case, as hydrogen ions separated from the transition metal extractant TE cause a reduction in pH, it may not be easy to perform the transition metal extraction while sequentially increasing the pH. Thus, to compensate for the insufficiency, it is possible to use a saponified transition metal extractant in which hydrogen ions of the transition metal extractant TE are substituted with sodium ions.

Even after the introduction of transition metal extractant TE and subsequent extraction of transition metals, a transition metal element that has not fully precipitated may still be present. In an embodiment, slight amounts of aluminium (Al), copper (Cu), and/or iron (Fe) may still be present. The elements that have not fully precipitated may be included in the first solution that is prepared.

In a method of preparing a first solution, it may be possible to omit the step S104 of introducing sodium phosphate (Na₃PO₄) followed by filtration to obtain precipitated lithium phosphate (Li₃PO₄) and the step S105 of introducing ferric sulfate (Fe₂(SO₄)₃) followed by filtration to remove a precipitated ferric phosphate (FePO₄).

### Preparation of Second Solution

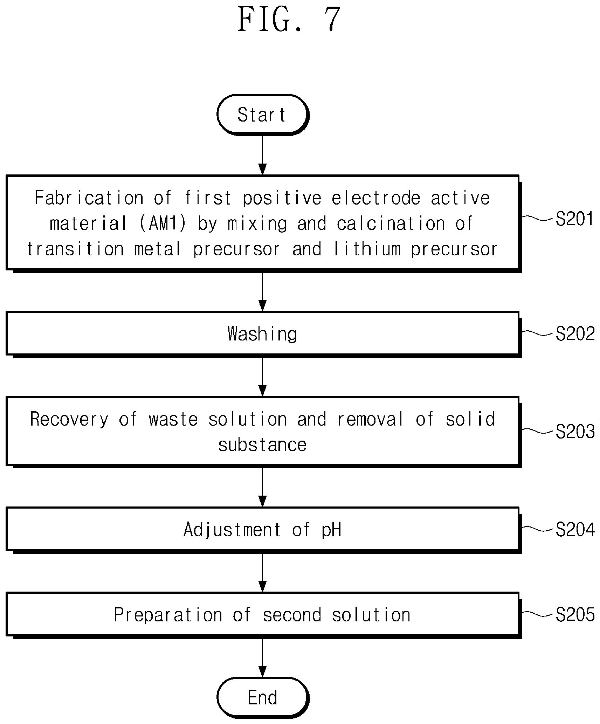

FIG. 7 illustrates a flow chart showing a method of preparing a second solution according to the present disclosure.

Referring to FIG. 7, the preparation of a second solution from a waste solution generated in a washing process of a positive electrode active material may include preparing a first positive electrode active material AM1 by calcining a mixture of a transition metal precursor and a lithium precursor (S201), washing the first positive electrode active material AM1 with a washing solution (S202), removing a solid substance by recovering a waste solution generated after the washing process (S203), and adjusting the waste solution to a pH range of about 7 to about 15 (S204). Thus, a second solution is prepared from the waste solution generated in a washing process of a positive electrode active material.

The composite of the transition metal precursor and the lithium precursor may be calcined to prepare the first positive electrode active material AM1 (S201). The first positive electrode active material AM1 may be a positive electrode active material expressed by Chemical Formula 2 below.

[Chemical Formula 2] LiM5ₑM6_{f}M7_{g}M8ₕO₂

In Chemical Formula 2, 0≤e≤1, 0≤f≤1, 0≤g≤1, 0≤h≤1, and e+f+g+h=1 hold true.

Each of M5, M6, M7, and M8 in Chemical Formula 2 may be an element selected from Ni, Co, Al, Cu, Mn, Ti, Mo, Zn, Zr, Si, Ge, V, Cr, B, Mg, Na, Sr, Ag, Nb, Ga, Ca, and Ba.

The first positive electrode active material AM1 may be washed to remove a residual lithium byproduct on a surface thereof (S202). A washing solution used for the washing process may include distilled water or an alkaline solution. A waste solution may be generated after the washing process.

The waste solution may contain lithium. After the step S201 of preparing a first positive electrode active material AM1 by calcining a mixture of a transition metal precursor and a lithium precursor, if necessary, a coating layer may be formed on a surface of the first positive electrode active material AM1. In an embodiment, the coating layer may include at least one selected from cobalt, aluminium, and zirconium. The formation of the coating layer may include adding a coating raw material and sodium hydroxide (NaOH). Therefore, the waste solution may additionally contain sodium hydroxide.

The waste solution generated after the washing process may be recovered to remove a solid substance (S203). The solid substance may include the first positive electrode active material AM1 and impurities incorporated during the washing process. The solid substance may be filtered with a decanter (centrifuge), a filter, or a filter press. In an embodiment, a filter paper applied to the filter or the filter press may have a pore size of about 0.5 µm to about 5 µm. Alternatively, a filter paper used in the filter or the filter press may be smaller than D10 of the first positive electrode active material AM1. The D10 of the first positive electrode active material AM1 refers to a diameter of particles whose cumulative volume is 10 vol% from small particle sizes in the particle size distribution of the first positive electrode active material AM1. The D10 may be measured by a widely known method to a person of ordinary skill in the art.

In an embodiment, the step S204 of adjusting the waste solution (from which the solid substance is removed) to a pH range of about 7 to about 15 may include introducing to the waste solution at least one alkali hydroxide selected from sodium hydroxide (NaOH), lithium hydroxide (LiOH), and potassium hydroxide (KOH). In another embodiment, the step S204 of adjusting the waste solution (from which the solid substance is removed) to a pH range of about 7 to about 15 may include evaporating the waste solution.

The second solution may include lithium hydroxide (LiOH) and/or lithium carbonate (Li₂CO₃). When a coating layer is formed on the surface of the first positive electrode active material AM1, the second solution may further include sodium hydroxide (NaOH). A weight of lithium may range from about 1,000 ppm to about 10,000 ppm relative to the total weight of the second solution.

The second solution may have a pH of about 10 to about 15. Such an alkaline pH may be due to lithium hydroxide (LiOH) and/or lithium carbonate (Li₂CO₃) present in the second solution.

In the step S201 of preparing a first positive electrode active material AM1 by calcining a composite of a transition metal precursor and a lithium precursor, the lithium precursor may be extracted by a lithium precursor extraction method of the present disclosure. For example, a waste solution, which is generated in a process for washing a positive electrode active material prepared using a lithium precursor extracted according to the present disclosure, may be reused as a raw material for preparing the second solution of the present disclosure.

### Extraction of Lithium Precursor

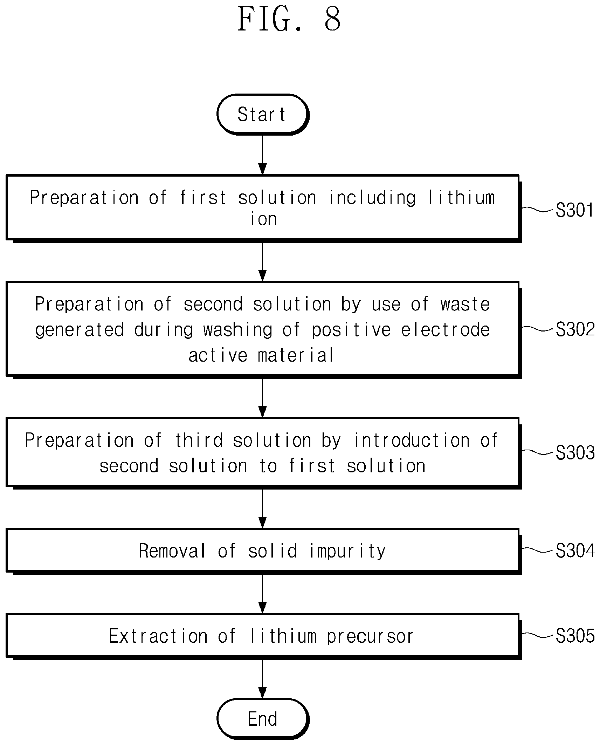

FIG. 8 illustrates a flow chart showing a method of extracting a lithium precursor according to the present disclosure.

Referring to FIG. 8, a method of extracting a lithium precursor may include preparing a first solution that contains lithium ions (S301), preparing a second solution by using a waste solution generated in a washing process of a positive electrode active material (S302), preparing a third solution by introducing the second solution to the first solution (S303), removing a precipitated solid impurity (S304), and extracting a lithium precursor (S305). Thus, the lithium precursor may be extracted from a waste solution generated in the washing process of the positive electrode active material and a discarded lithium transition metal composite oxide.

The first solution and the second solution may be prepared (S301 and S302) through the method of preparing a first solution and the method of preparing a second solution described above. The third solution may be prepared (S303) by introducing the second solution to the first solution. The introduction of the second solution (S303) may be aimed at removing impurity ions other than lithium ions from the first solution. In addition, the introduction of the second solution (S303) may be aimed at recovering lithium ions contained in the second solution as the lithium precursor without requiring a separate process.

The introduction of the second solution (S303) may be performed in such a way that a weight of lithium included in the third solution (or a weight of contained lithium) does not fall below about 3,000 ppm relative to the total weight of the third solution. In an embodiment, the introduction of the second solution to the first solution (S303) may include introducing the second solution while allowing the third solution to maintain its pH range of about 7 to about 11. As the second solution is introduced while satisfying the condition of lithium amounts, it may be possible to create an environment where precipitation of lithium ions is hindered while precipitation of ions other than lithium ions are facilitated. Through this process, impurity ions (excluding lithium ions) may be extracted while ensuring that an amount of lithium ions does not decrease, and, thus, it is possible to obtain a high-purity lithium precursor.

A solid impurity may precipitate when the second solution is introduced to the first solution. The step S304 of removing a precipitated solid impurity may include using a solid-liquid separator such as a filter, a filter press, or a decanter (a centrifuge). The precipitated solid impurity may include a remainder that has not fully precipitated during the step S102 of introducing sodium hydroxide BS1 to the acid solution AS in which the discarded lithium transition metal composite oxide AM1 is dissolved and then removing a precipitate through filtration. The precipitated solid impurity may include an element other than manganese (Mn), cobalt (Co), and nickel (Ni) among transition metals. For example, the precipitated solid impurity may include iron (Fe), aluminium (Al), copper (Cu), zinc (Zn), magnesium (Mg), and/or calcium (Ca).

The precipitated solid impurity may also include a remainder that has not been fully extracted from the acid solution AS in which the discarded lithium transition metal composite oxide ML1 is dissolved. In an embodiment, the precipitated solid impurity may include manganese (Mn), cobalt (Co), and/or nickel (Ni).

The precipitated solid impurity may further include a bivalent transition metal and/or a trivalent transition metal. In an embodiment, the precipitated solid impurity may include Al(OH)₃ and/or Co(OH)₂. The precipitation may occur because the second solution exhibits alkalinity. The precipitated solid impurity may be formed when a hydroxide ion (OH⁻) originated from the second solution is combined with a bivalent transition metal ion and/or a trivalent transition metal ion. Unlike a conventional method of recovering typical valuable metals, the present disclosure may reduce environmental pollution by using the second solution instead of ordinary alkaline solutions.

A lithium precursor may be extracted from the third solution from which impurities are removed (S305). Alkali carbonate may be introduced to the third solution from which impurities are removed, and then a lithium precursor in the form of lithium carbonate (Li₂CO₃) may be recovered through solid-liquid separation. In an embodiment, the alkali carbonate may be sodium carbonate (Na₂CO₃). The obtained lithium carbonate may be used as a raw material for low-nickel positive electrode active materials in which a molar ratio of nickel to other metal elements excluding lithium in the positive electrode active material is less than about 60%. In an embodiment, the low-nickel positive electrode active material may be LiNi_{0.6}Co_{0.2}Mn_{0.2}O₂.

An additional process may be performed to extract a lithium precursor in the form of lithium hydroxide (LiOH). The obtained lithium carbonate may be dispersed in an aqueous solution, and then hydroxide may be introduced to the aqueous solution. In an embodiment, after introduction of calcium hydroxide (Ca(OH)₂) as the hydroxide, calcium carbonate (CaCO₃) may be removed through solid-liquid separation, and then a lithium precursor in the form of lithium hydroxide (LiOH) may be extracted through evaporation. The obtained lithium hydroxide may be used as a raw material for high-nickel positive electrode active materials in which a molar ratio of nickel to other metal elements excluding lithium in the positive electrode active material is greater than about 60%. In an embodiment, the high-nickel positive electrode active material may be LiNi_{0.8}Co_{0.15}Al_{0.05}O₂.

A lithium precursor obtained according to the present disclosure may be used as a raw material for preparing a positive electrode active material. In this case, a transition metal precursor used as a raw material for preparing a positive electrode active material may be expressed by Chemical Formula 3 below.

[Chemical Formula 3] M9ᵢM10ⱼM11ₖM12ₗ(OH)₂

In Chemical Formula 3, 0≤i≤1, 0≤j≤1, 0≤k≤1, 0≤1≤1, and i+j+k+1=1 hold true. Each of M9, M10, M11, and M12 in Chemical Formula 3 may be an element selected from Ni, Co, Al, Cu, Mn, Ti, Mo, Zn, Zr, Si, Ge, V, Cr, B, Mg, Na, Sr, Ag, Nb, Ga, Ca, and Ba.

The following will discuss preparations, embodiments, and comparative examples of the present disclosure. However, the following preparations and embodiments are merely illustrative examples of the present disclosure, and the present disclosure is not limited to the following preparations and embodiments.

### Preparation 1: Preparation of First Solution

LiNi_{0.8}Co_{0.15}Al_{0.05}O₂ as a discarded lithium transition metal composite oxide, sulfuric acid (H₂SO₄), a reducing agent (H₂O₂), and water were mixed in a weight ratio of 1:1.5:0.5:3. Filtration was subsequently carried out to remove undissolved solid to prepare a lithium transition metal solution. A sodium hydroxide (NaOH) solution of 25 wt% was added until the lithium transition metal solution reached a pH of about 5.5. A precipitate produced in the lithium transition metal solution was removed through solid-liquid separation. A transition metal extractant, CYANEX^{®} 272 was added to the lithium transition metal solution to remove nickel (Ni) and cobalt (Co). Sodium phosphate (Na₃PO₄) was added to the lithium transition metal solution, and solid lithium phosphate (Li₃PO₄) was obtained through solid-liquid separation. The obtained lithium phosphate was added to and dissolved in sulfuric acid (H₂SO₄). Ferric sulfate (Fe₂(SO₄)₃) was added to a solution in which the lithium phosphate was dissolved, and then a precipitate including ferric phosphate (FePO₄) was removed through solid-liquid separation. Thus, a first solution including lithium ions was prepared.

### Preparation 2: Preparation of Second Solution

Ni_{0.8}Co_{0.15}Al_{0.05}(OH)₂ and lithium hydroxide (LiOH) were mixed and then calcined to prepare a positive electrode active material. The positive electrode active material was washed with a washing solution, and thereafter a waste solution was obtained. A solid substance in the waste solution was filtered with a 5-micrometer filter paper. In this case, the waste solution exhibited a pH of about 13.6. The waste solution was evaporated until the pH reached about 15. Thus, a second solution was prepared.

### Embodiment 1: Preparation of Third Solution

The second solution of Preparation 2 was added to the first solution of Preparation 1 to prepare a mixed solution with a pH of about 10. A solid impurity precipitated in the mixed solution and was removed to prepare a third solution.

### Comparative Example 1: Preparation of First Comparative Solution

A first comparative solution was prepared using the same method as that of Embodiment 1, except that sodium hydroxide was added to the first solution of Preparation 1 instead of the second solution of Preparation 2 (i.e. the second solution of Preparation 2 was not added to the first solution of Preparation 1).

### Embodiment 2: Extraction I of Lithium Precursor

A lithium precursor was extracted from the third solution of Embodiment 1.

Sodium carbonate (Na₂CO₃) was added to the third solution of Embodiment 1 to form a precipitate. Solid lithium carbonate (Li₂CO₃) was obtained through solid-liquid separation from the third solution. The lithium carbonate was added to a calcium hydroxide (Ca(OH)₂) aqueous solution to form a precipitate. Solid calcium carbonate (Ca(CO₃)) was removed through solid-liquid separation from the aqueous solution, and, thus, a solution in which lithium hydroxide (LiOH) was dissolved was obtained. The solution was evaporated to extract a lithium precursor in the form of lithium hydroxide.

Although lithium hydroxide was finally extracted in Embodiment 2 of the present disclosure, if necessary, it may be possible to stop at the step of obtaining lithium carbonate during the described procedure and to extract a lithium precursor in the form of lithium carbonate.

### Comparative Example 2: Extraction II of Lithium Precursor

A lithium precursor (lithium hydroxide (LiOH)) was extracted using the same method as that of Embodiment 2, except that the first comparative solution of Comparative Example 1 was used instead of the third solution of Embodiment 1.

### Embodiment 3: Preparation I of High-nickel Positive Electrode Active Material

A high-nickel positive electrode active material was prepared using the lithium hydroxide of Embodiment 2.

A nickel sulfate (NiSO₄) aqueous solution and a cobalt sulfate (CoSO₄) aqueous solution were mixed in such a way that a molar ratio of nickel and cobalt became 0.8:0.15. Sodium hydroxide (NaOH) and a coprecipitation chelating agent or ammonium hydroxide (NH₄OH) were added to the mixed solution to prepare a transition metal precursor, Ni_{0.8}Co_{0.15}(OH)₂, through coprecipitation. The Ni_{0.8}Co_{0.15}(OH)₂, aluminium hydroxide (Al(OH)₃), and the lithium hydroxide of Embodiment 2 were mixed in such a way that a molar ratio of nickel (Ni), cobalt (Co), aluminum (Al), and lithium (Li) became 0.8:0.15:0.05:1.1, and the mixture were calcined to prepare a positive electrode active material. The positive electrode active material was washed to remove lithium that remained on a surface of the positive electrode active material. Lithium was additionally added to compensate for the excessively washed away, and was the resulting product was calcined at 750°C. Thus, LiNi_{0.8}Co_{0.15}Al_{0.05}O₂ (a high-nickel positive electrode active material) was obtained.

### Comparative Example 3: Preparation II of High-nickel Positive Electrode Active Material

LiNi_{0.8}Co_{0.15}Al_{0.05}O₂ (a high-nickel positive electrode active material) was prepared using the same method as that of Embodiment 3, except that the lithium hydroxide of Comparative Example 2 was used instead of the lithium hydroxide of Embodiment 2.

### Embodiment 4: Fabrication I of Rechargeable Lithium Battery

A high-nickel rechargeable lithium battery was fabricated using the high-nickel positive electrode active material of Embodiment 3. A high-nickel positive electrode active material of 97 wt% prepared according to Embodiment 3, polyvinylidene fluoride of 1.5 wt% as a binder, and carbon black of 1.5 wt% as a conductive material were mixed in a solvent of N-methylpyrrolidone to manufacture a positive electrode active material slurry. An aluminium current collector having a thickness of 15 µm was coated with the positive electrode active material slurry whose amount reached 15 mg per cm² of the current collector, and then dried and roll-pressed to manufacture a positive electrode.

A 2032-type coin cell was manufactured using the positive electrode and a lithium metal counter electrode. A separator (having a thickness of about 16 µm) formed of a porous polyethylene (PE) film was interposed between the positive electrode and the lithium metal counter electrode. As an electrolyte, LiPF₆ of 1.3 M was mixed with a mixed solvent including ethylene carbonate (EC), ethyl methyl carbonate (ECM), and dimethyl carbonate (DMC) mixed in a volume ratio of 3:4:3.

### Comparative Example 4: Fabrication II of Rechargeable Lithium Battery

A high-nickel rechargeable lithium battery was fabricated using the same method as that of Embodiment 4, except that the high-nickel positive electrode active material of Comparative Example 3 was used instead of the high-nickel positive electrode active material of Embodiment 3.

### Embodiment 5: Fabrication III of Rechargeable Lithium Battery

A low-nickel positive electrode active material was prepared using the lithium carbonate of Embodiment 2. The lithium carbonate was extracted by stopping at the step of obtaining lithium carbonate during the described procedure of Embodiment 2.

A nickel sulfate (NiSO₄) aqueous solution, a cobalt sulfate (CoSO₄) aqueous solution, and a manganese sulfate (MnSO₄) aqueous solution were mixed in such a way that a molar ratio of nickel, cobalt, and manganese became 0.6:0.2:0.2. Sodium hydroxide (NaOH) and a coprecipitation chelating agent or ammonium hydroxide (NH₄OH) were added to the mixed solution to prepare a transition metal precursor, Ni_{0.6}Co_{0.2}Mn_{0.2}(OH)₂, through coprecipitation. The Ni_{0.6}Co_{0.2}Mn_{0.2}(OH)₂ and the lithium carbonate of Embodiment 2 were mixed in such a way that a molar ratio of nickel (Ni), cobalt (Co), manganese (Mn), and lithium (Li) became 0:6:0.2:0.2:1.02, and the mixture was calcined to prepare a positive electrode active material. LiNi_{0.6}Co_{0.2}Mn_{0.2}O₂ or a low-nickel positive electrode active material was prepared.

A low-nickel rechargeable lithium battery was fabricated using the low-nickel positive electrode active material. The low-nickel rechargeable lithium battery was fabricated using the same method as that of Embodiment 4, except that the low-nickel positive electrode active material was used instead of the high-nickel positive electrode active material of Embodiment 3.

### Comparative Example 5: Fabrication IV of Rechargeable Lithium Battery

A low-nickel positive electrode active material was prepared using the lithium carbonate of Comparative Example 2. The lithium carbonate was extracted by stopping at the step of obtaining lithium carbonate during the described procedure of Comparative example 2. A low-nickel positive electrode active material was prepared using the same method as that of Embodiment 5, except that the lithium carbonate of Comparative Example 2 was used instead of the lithium carbonate of Embodiment 2.

A low-nickel rechargeable lithium battery was fabricated using the low-nickel positive electrode active material. The low-nickel rechargeable lithium battery was fabricated using the same method as that of Comparative Example 4, except that the low-nickel positive electrode active material was used instead of the high-nickel positive electrode active material of Comparative Example 3.

### Evaluation Example 1: Analysis I on Components of Solution

Compositions of solutions in each step of Preparation 1 were analyzed, and results were listed in Table 1.

**[Table 1]**

| Ion classification | Li | Na | Al | Cu | Ni | Co | Mn | Fe | SO₂²⁻ | PO₄³⁻ | Ca | Mg |
|---|---|---|---|---|---|---|---|---|---|---|---|---|
| Lithium transition metal solution | 11345 | N/D | 2213 | 3 | 77153 | 14326 | N/D | N/D | 217431 | N/D | 2 | 3 |
| Remaining solution | 7619 | 471 | 235 | 5 | 35 | 7 | N/D | N/D | 154727 | N/D | N/D | N/D |
| First solution | 17562 | 68249 | 17 | 1 | 13 | 4 | N/D | 353 | 30923 | 684 | 31 | 86 |

### (N/D means no detection; units are ppm)

Referring to Table 1, it may be observed that the first solution includes smaller concentrations of nickel and cobalt than those of the lithium transition metal and remaining solutions and the first solution includes a larger concentration of lithium than that of the lithium transition metal and remaining solutions. Thus, it may be ascertained that the first solution was prepared by removing ions other than lithium to increase a concentration of lithium ions so as to extract high-purity lithium in subsequent processes.

### Evaluation Example 2: Analysis II on Components of Solution

Compositions of solutions in each step of Preparation 2 were analyzed, and results were listed in Table 2.

**[Table 2]**

| Ion classification | Li | Na | Al | Cu | Ni | Co | Mn | Fe | SO2²⁻ | PO4³⁻ | Ca | Mg |
|---|---|---|---|---|---|---|---|---|---|---|---|---|
| Waste solution | 3783 | 6881 | 3 | N/D | 2 | 2 | N/D | N/D | 6048 | N/D | 1 | N/D |
| Second solution | 6165 | 13903 | 4 | N/D | 5 | 3 | N/D | N/D | 12427 | N/D | 2 | N/D |

| | | | | | | | | | | | | |
|---|---|---|---|---|---|---|---|---|---|---|---|---|
| (N/D means no detection; units are ppm) | | | | | | | | | | | | |

Referring to Table 2, it may be observed that the second solution includes a larger concentration of lithium than that of the waste solution. Thus, it may be ascertained that a solution with a higher concentration of lithium ions can be prepared from the waste solution by following the method of preparing a second solution in accordance with the present disclosure. These characteristics of the second solution may contribute to increasing an amount of lithium contained in a finally-obtained lithium precursor and to acquiring a high-purity lithium precursor.

### Evaluation Example 3: Analysis III on Components of Solution

The components of the third solution of Embodiment 1 and the first comparative solution of Comparative Example 1 were analyzed, and results were listed in Table 3.

**[Table 3]**

| Ion classification | Li | Na | Al | Cu | Ni | Co | Mn | Fe | SO2²⁻ | PO4³⁻ | Ca | Mg |
|---|---|---|---|---|---|---|---|---|---|---|---|---|
| Embodiment 1 | 15234 | 71260 | 2 | N/D | 3 | N/D | N/D | 5 | 500 | 35 | 21 | 3 |
| Comparative Example 1 | 12647 | 92383 | 5 | N/D | 2 | 1 | N/D | 6 | 477 | 48 | 18 | 1 |

| | | | | | | | | | | | | |
|---|---|---|---|---|---|---|---|---|---|---|---|---|
| (N/D means no detection; units are ppm) | | | | | | | | | | | | |

Referring to Table 3, it may be observed that the third solution of Embodiment 1 includes a larger concentration of lithium than that of the first comparative solution of Comparative Example 1 and includes a smaller concentration of sodium than that of the first comparative solution of Comparative Example 1. These characteristics of the third solution may contribute to increasing an amount of lithium and decreasing an amount of sodium contained in a finally-obtained lithium precursor and to acquiring a high-purity lithium precursor.

### Evaluation Example 4: Analysis on Components of Lithium Precursor

The components of the lithium precursor of Embodiment 2 and the lithium precursor of Comparative Example 2 were analyzed, and results were listed in Table 4. In Table 4, purity refers to a weight of lithium ions relative to the total weight of the lithium precursor.

**[Table 4]**

| Ion classification | Li Purity (%) | Na | Al | Cu | Ni | Co | Mn | Fe | SO₂²⁻ | PO₄³⁻ | Ca | Mg |
|---|---|---|---|---|---|---|---|---|---|---|---|---|
| Embodiment 2 | 99.9 | 312 | N/D | N/D | N/D | N/D | N/D | 8 | 1214 | 129 | 59 | 33 |
| Comparative Example 2 | 996 | 571 | N/D | N/D | 1 | N/D | N/D | 9 | 1133 | 293 | 76 | 43 |

| | | | | | | | | | | | | |
|---|---|---|---|---|---|---|---|---|---|---|---|---|
| (N/D means no detection; units are ppm) | | | | | | | | | | | | |

Referring to Table 4, it may be observed that the lithium precursor of Embodiment 2 has higher lithium purity than that of the lithium precursor of Comparative Example 2, and includes a smaller concentration of sodium than that of the lithium precursor of Comparative Example 2. Thus, as predicted based on Evaluation Examples 2 and 3, it may be ascertained that an embodiment of the present disclosure can obtain a high-purity lithium precursor.

### Evaluation Example 5: Analysis I of Battery Characteristics

An evaluation of characteristics of the high-nickel rechargeable lithium battery of Embodiment 4 and the high-nickel rechargeable lithium battery of Comparative Example 4 was performed.

A rechargeable lithium battery was initially charged at 25 °C under conditions of constant current (0.2C) and constant voltage (4.25V), and after resting for 10 minutes, the rechargeable lithium battery was initially discharged under conditions of constant current (0.2C) until reaching 2.5V. Afterwards, charging and discharging were repeated 50 times at 25 °C under 0.2C/0.2C conditions. Tables 5 and 9 below represent evaluation results of battery characteristics.

**[Table 5]**

| | Initial discharge capacity (mAh·g⁻¹) | Initial efficiency (%) | Capacity retention rate at room temperature (%, 50 times) |
|---|---|---|---|
| Embodiment 4 | 201.8 | 90.9 | 95.1 |
| Comparative Example 4 | 202.3 | 90.7 | 94.6 |

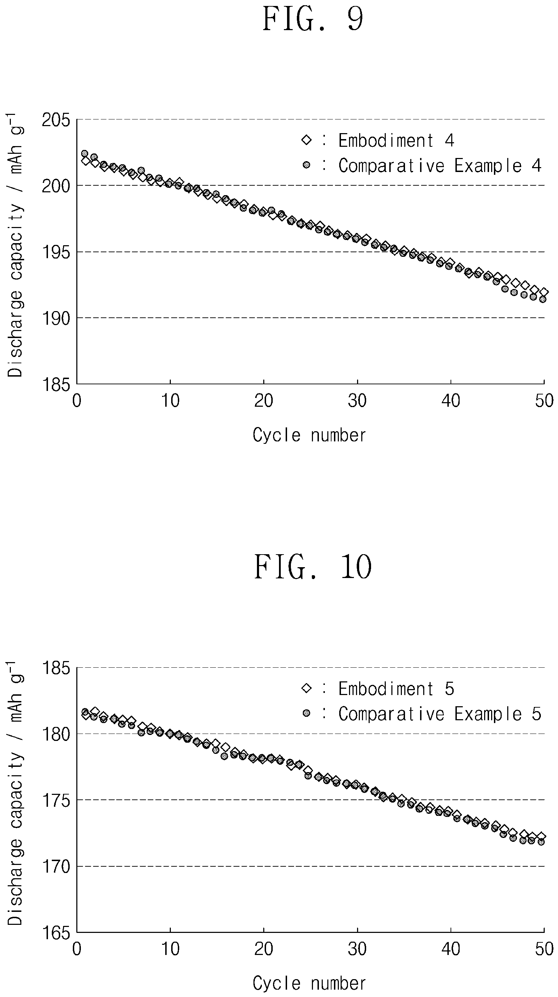

Referring to Table 5 and FIG. 9, it may be observed that the rechargeable lithium battery of Embodiment 4 exhibits an initial charge-discharge capacity similar to that of the rechargeable lithium battery of Comparative Example 4, and exhibits initial efficiency and room-temperature capacity retention rate superior to those of the rechargeable lithium battery of Comparative Example 4. Thus, it may be ascertained that a method of recovering a lithium precursor according to the present disclosure is capable of achieving all the objects specified at the outset of the disclosure and is also capable of fabricating high-nickel rechargeable lithium batteries that will have performance characteristics that are the same as or superior to that of ordinary high-nickel rechargeable lithium batteries.

### Evaluation Example 6: Analysis II of Battery Characteristics

An evaluation of characteristics of the low-nickel rechargeable lithium battery of Embodiment 5 and the low-nickel rechargeable lithium battery of Comparative Example 5 was performed, and results were listed in Table 6 and FIG. 10. The evaluation conditions were the same as those of Evaluation Example 5.

**[Table 6]**

| | Initial discharge capacity (mAh·g⁻¹) | Initial efficiency (%) | Capacity retention rate at room temperature (%, 50 times) |
|---|---|---|---|
| Embodiment 5 | 181.4 | 90.6 | 94.9 |
| Comparative Example 5 | 181.6 | 90.7 | 94.6 |

Referring to Table 6 and Fig. 10, it may be observed that the rechargeable lithium battery of Embodiment 5 exhibits an initial charge-discharge capacity similar to that of the rechargeable lithium battery of Comparative Example 5, and exhibits initial efficiency and room-temperature capacity retention rate similar or superior to those of the rechargeable lithium battery of Comparative Example 5. Thus, it may be ascertained that a method of recovering a lithium precursor according to the present disclosure is capable of achieving all the objects specified at the outset of this disclosure and is also capable of fabricating low-nickel rechargeable lithium batteries that will have performance characteristics that are the same as or superior to that of ordinary low-nickel rechargeable lithium batteries.

In a method of recovering a lithium precursor according to the present disclosure, a waste solution generated in a washing process of a positive electrode active material may be properly treated and then introduced into a lithium precursor recovery procedure. It may thus be possible to reduce the use of alkaline solutions in the lithium precursor recovery procedure, to facilitate easy recovery of lithium from the waste solution without the need for additional processes, and to recover high-purity lithium precursors.

While this disclosure has been described in connection with what is presently considered to be preferred embodiments, it is to be understood that the present disclosure is not limited to the disclosed embodiments and is intended to cover various modifications and equivalent arrangements included within the scope of the appended claims, and therefore the aforementioned embodiments should be understood to be examples but not limiting this disclosure in any way.

Embodiments are set out in the following clauses:
Clause 1. A method of recovering a lithium precursor, the method comprising:
   preparing a first solution that contains lithium ions;
   preparing a second solution by using a waste solution generated in a washing process of a positive electrode active material;
   preparing a third solution by introducing the second solution to the first solution; and
   extracting the lithium precursor from the third solution.
Clause 2. The method of clause 1, wherein preparing the first solution includes:
   introducing a discarded lithium transition metal composite oxide to an acid solution to form a lithium transition metal solution; and
   introducing a transition metal extractant to the lithium transition metal solution to remove a transition metal in the lithium transition metal solution.
Clause 3. The method of clause 2, wherein the discarded lithium transition metal composite oxide is originated from a powdered discarded rechargeable lithium battery or a waste generated during fabrication process of a rechargeable lithium battery, and
   wherein the discarded lithium transition metal composite oxide includes a compound expressed by:

      LiM1ₐM2_{b}M3_{c}M4_{d}O₂
   where 0≤a≤1, 0≤b≤1, 0≤c≤1, 0≤d≤1, and a+b+c+d=1, and each of M1, M2, M3, and M4 is selected from Ni, Co, Al, Cu, Mn, Ti, Mo, Zn, Zr, Si, Ge, V, Cr, B, Mg, Na, Sr, Ag, Nb, Ga, Ca, and Ba.
Clause 4. The method of clause 2 or clause 3, wherein the acid solution includes at least one of sulfuric acid (H₂SO₄), hydrochloric acid (HCl), nitric acid (HNO₃), and phosphoric acid (H₃PO₄).
Clause 5. The method of any one of clauses 2 to 4, wherein the transition metal extractant includes at least one of di-(2-ethylhexyl)phosphoric acid (D2EHPA), bis(2,2,4-trimethylpentyl)phosphinic acid, and 2-ethylhexyl 2-ethylhexyphosphonic acid (PC88A).
Clause 6. The method of any one of clauses 1 to 5, wherein preparing the second solution includes:
   washing a calcined positive electrode active material with a washing solution;
   removing a solid substance by recovering waste solution generated after the washing; and
   adjusting the waste solution to a pH of about 7 to about 15.
Clause 7. The method of clause 6, wherein removing the solid substance from the waste solution includes using a decanter, centrifuge, a filter having a pore size of about 0.5 µm to about 5 µm, or a filter press having a pore of about 0.5 µm to about 5 µm.
Clause 8. The method of clause 6 or clause 7, wherein the positive electrode active material is expressed:

   LiM5ₑM6_{f}M7_{g}M8ₕO₂

   where 0≤e≤1, 0≤f≤1, 0≤g≤1, 0≤h≤1, and e+f+g+h=1, and each of M5, M6, M7, and M8 is selected from Ni, Co, Al, Cu, Mn, Ti, Mo, Zn, Zr, Si, Ge, V, Cr, B, Mg, Na, Sr, Ag, Nb, Ga, Ca, and Ba.
Clause 9. The method of any one of clauses 6 to 8, wherein adjusting the pH of the waste solution includes one of (i) introducing to the waste solution at least one alkali hydroxide selected from sodium hydroxide (NaOH), lithium hydroxide (LiOH), and potassium hydroxide (KOH) and (ii) evaporating the waste solution.
Clause 10. The method of any one of clauses 6 to 9, wherein the lithium precursor is lithium carbonate (Li₂CO₃) or lithium hydroxide (LiOH).
Clause 11. The method of any one of clauses 1 to 10, wherein the second solution includes lithium carbonate (Li₂CO₃) and lithium hydroxide (LiOH).
Clause 12. The method of any one of clauses 1 to 11, wherein a weight of lithium ranges from about 1,000 ppm to about 10,000 ppm relative to a total weight of the second solution.
Clause 13. The method of any one of clauses 1 to 12, wherein preparing the third solution by introducing the second solution to the first solution includes introducing the second solution while allowing the third solution to maintain a pH of about 7 to about 11.
Clause 14. The method of any one of clauses 1 to 13, wherein preparing the third solution by introducing the second solution to the first solution includes introducing the second solution in such a way that a weight of lithium included in the third solution does not fall below about 3,000 ppm relative to a total weight of the third solution.
Clause 15. The method of any one of clauses 1 to 14, wherein extracting the lithium precursor includes:
   removing a solid impurity precipitated from the third solution; and
   introducing alkali carbonate to the third solution and then filtering to obtain lithium carbonate (Li₂CO₃).
Clause 16. The method of claim 15, further comprising:
   introducing hydroxide to an aqueous solution including the obtained lithium carbonate (Li₂CO₃);
   removing a precipitate from the aqueous solution; and
   evaporating the aqueous solution to obtain lithium hydroxide (LiOH).
Clause 17. A method of preparing a positive electrode active material for a rechargeable lithium battery, the method comprising:
   mixing and calcining a transition metal precursor and a lithium precursor that is recovered by the method of any one of clauses 1 to 16; and
   washing the calcined mixture.
Clause 18. The method of clause 17, wherein the transition metal precursor is a compound expressed by:

   M9ᵢM10ⱼM11ₖM12ₗ(OH)₂

   where 0≤i≤1, 0≤j≤1, 0≤k≤1, 0≤1≤1, and i+j+k+1=1, and each of M9, M10, M11, and M12 is selected from Ni, Co, Al, Cu, Mn, Ti, Mo, Zn, Zr, Si, Ge, V, Cr, B, Mg, Na, Sr, Ag, Nb, Ga, Ca, and Ba.
Clause 19. The method of clause 18, wherein M9 is Ni.
Clause 20. A rechargeable lithium battery comprising the positive electrode active material prepared according to any one of clauses 17 to 19.

## Claims

1. A method of recovering a lithium precursor, the method comprising:
preparing a first solution that contains lithium ions;
preparing a second solution by using a waste solution generated in a washing process of a positive electrode active material;
preparing a third solution by introducing the second solution to the first solution; and
extracting the lithium precursor from the third solution.

2. The method of claim 1, wherein preparing the first solution includes:
introducing a discarded lithium transition metal composite oxide to an acid solution to form a lithium transition metal solution; and
introducing a transition metal extractant to the lithium transition metal solution to remove a transition metal in the lithium transition metal solution.

3. The method of claim 2, wherein the discarded lithium transition metal composite oxide is originated from a powdered discarded rechargeable lithium battery or a waste generated during fabrication process of a rechargeable lithium battery, and
wherein the discarded lithium transition metal composite oxide includes a compound expressed by:
LiM1ₐM2_{b}M3_{c}M4_{d}O₂
where 0≤a≤1, 0≤b≤1, 0≤c≤1, 0≤d≤1, and a+b+c+d=1, and each of M1, M2, M3, and M4 is selected from Ni, Co, Al, Cu, Mn, Ti, Mo, Zn, Zr, Si, Ge, V, Cr, B, Mg, Na, Sr, Ag, Nb, Ga, Ca, and Ba.

4. The method of claim 2 or claim 3, wherein the acid solution includes at least one of sulfuric acid (H₂SO₄), hydrochloric acid (HCl), nitric acid (HNO₃), and phosphoric acid (H₃PO₄).

5. The method of any one of claims 1 to 4, wherein preparing the second solution includes:
washing a calcined positive electrode active material with a washing solution;
removing a solid substance by recovering waste solution generated after the washing; and
adjusting the waste solution to a pH of about 7 to about 15.

6. The method of claim 5, wherein removing the solid substance from the waste solution includes using a decanter, centrifuge, a filter having a pore size of about 0.5 µm to about 5 µm, or a filter press having a pore of about 0.5 µm to about 5 µm.

7. The method of claim 5 or claim 6, wherein adjusting the pH of the waste solution includes one of (i) introducing to the waste solution at least one alkali hydroxide selected from sodium hydroxide (NaOH), lithium hydroxide (LiOH), and potassium hydroxide (KOH) and (ii) evaporating the waste solution.

8. The method of any one of claims 5 to 7, wherein the lithium precursor is lithium carbonate (Li₂CO₃) or lithium hydroxide (LiOH).

9. The method of any one of claims 1 to 8, wherein the second solution includes lithium carbonate (Li₂CO₃) and lithium hydroxide (LiOH).

10. The method of any one of claims 1 to 9, wherein a weight of lithium ranges from about 1,000 ppm to about 10,000 ppm relative to a total weight of the second solution.

11. The method of any one of claims 1 to 10, wherein preparing the third solution by introducing the second solution to the first solution includes introducing the second solution while allowing the third solution to maintain a pH of about 7 to about 11.

12. The method of any one of claims 1 to 11, wherein preparing the third solution by introducing the second solution to the first solution includes introducing the second solution in such a way that a weight of lithium included in the third solution does not fall below about 3,000 ppm relative to a total weight of the third solution.

13. The method of any one of claims 1 to 12, wherein extracting the lithium precursor includes:
removing a solid impurity precipitated from the third solution; and
introducing alkali carbonate to the third solution and then filtering to obtain lithium carbonate (Li₂CO₃).

14. The method of claim 13, further comprising:
introducing hydroxide to an aqueous solution including the obtained lithium carbonate (Li₂CO₃);
removing a precipitate from the aqueous solution; and
evaporating the aqueous solution to obtain lithium hydroxide (LiOH).

15. A rechargeable lithium battery comprising a positive electrode active material prepared using the lithium precursor recovered by the method of any one of claims 1 to 14.
